(19) Europäisches Patentamt
European Patent Office
Office européen des brevets

(11) **EP 2 698 749 A1**

(12) **EUROPEAN PATENT APPLICATION**

(43) Date of publication:
**19.02.2014 Bulletin 2014/08**

(51) Int Cl.:
**G06Q 10/02** (2012.01)

(21) Application number: **12368021.7**

(22) Date of filing: **14.08.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Amadeus s.a.s.**
**06410 Biot (FR)**

(72) Inventors:
• **Le Marier, Mathieu**
**06600 Antibes (FR)**
• **Lafont, Karine**
**06130 Grasse (FR)**

• **Pasquier-Meunier, Nicolas**
**06000 Nive (FR)**
• **Cassan-Barnel, Damien**
**06110 Le Cannet (FR)**
• **Cazeaux, Olivier**
**06160 Juan-les-Pins (FR)**

(74) Representative: **Cases, Jean-François et al**
**Amadeus S.A.S**
**Legal IPC**
**485 Route du Pin Montard**
**BP 69**
**06902 Sophia Antipolis Cedex (FR)**

(54) **Passenger oriented seating system and method**

(57)      A computer- implemented system of passenger oriented seating allocation proposes seats to passengers based on both a passenger and an airline's ranking of seating criteria. The system may assign a numerical weight to each seating criteria based on the passenger and the airline's ranking of the seating criteria, and a seating generation module may generate a seat based on these numerical weights. The system may also generate affinity links between passengers, which may be utilized to integrate personal passenger-oriented and professional information of a passenger to be utilized during the seating allocation process to take into account passengers' preferences in being seated next to people with whom they may be interested.

FIGURE 3

**Description**

**CROSS REFERENCE TO RELATED APPLICATIONS**

This application claims the benefit of U.S. Patent Application No. 10/520,115, titled "Method of Allocating Seats to Customers in a Computer Reservation System," filed January 3, 2005, and U.S. Patent Application No. 12/661,527 titled "Seat Allocation to Passengers on an Aircraft," filed on March 18, 2010, which are hereby incorporated by reference in their entirety for all purposes.

**TECHNICAL FIELD**

The present invention is directed to a system and method that facilitates seating allocation for a passenger by balancing both a passenger and an airline's rankings of seating criteria.

**BACKGROUND**

There are currently various airline information technology systems which are used to facilitate the booking of airfare. These airline reservation systems typically utilize and only take into account criteria that are most important to the airline itself when allocating and proposing seats to passengers. This seating allocation process can often lead to situations where criteria important to passengers are not taken into account, and may ultimately lower the overall travel experience and customer satisfaction for passengers.

For example, airlines usually give a great importance to adjacency when several passengers are travelling together. However in the case of a business trip, work colleagues may not want to travel seated in adjacent seats, and may prefer to have an empty, "courtesy" seat next to them. Likewise, on flights with several stops, "multi-leg flights", airlines may give a great importance to a "through seat" to their passengers so that the passengers can keep their same seats for each leg of the flight. However, in this situation, a family traveling together may likely prefer to be seated together for all legs of the trip, even if they have to change their seats between legs of the flight.

Additionally, these airline reservation systems do not take into account and do not integrate passenger-oriented and professional data of a passenger during the seating allocation process. These systems do not evaluate a passenger's desire to be sat next to other passengers with similar interests and expectations, and accordingly do not take into account a potential affinity between passengers.

Even though passengers may utilize airline reservation systems to request a specific seat, passengers may prefer to rely on the airline reservation system to propose the best seat available according to criteria that the passenger considers important by integrating passenger preferences into the airline seating allocation process.

**SUMMARY**

A computer-implemented passenger oriented seating system proposes seats to passengers based on both a passenger and an airline's ranking of seating criteria. This seating system may include a passenger seating criteria repository, an airline seating criteria repository and a computer-implemented seating generation module, which are integrated with each other. The passenger's ranking of passenger seating criteria and the airline's ranking of airline seating criteria may be retrieved by the system and stored in the passenger seating criteria repository and the airline seating criteria repository respectively for future utilization during the seating allocation process. The system may assign a numerical weight to each seating criteria based on the passenger and the airline's ranking of the seating criteria, and the computer-implemented seating generation module may generate a seat based on these numerical weights. The airline may provide a multiplier, which may be based upon passenger type, to be associated with a ranking of a particular seating criteria. Additionally, the system may include a computer-implemented seat map display module which displays proposed seats to passengers based on passenger and airline rankings of seating criteria.

The passenger oriented seating system integrates passengers' preferences and seating criteria with those utilized by the airline during the seating allocation process. The system facilitates a passenger's ranking of available criteria used for the seating allocation process of an airline. In proposing seats based on both a passenger and an airline's seating criteria, the seating process may become more oriented towards a passenger's requirements and expectations, rather than solely relying on an airline's general policy and criteria. The system may allow each passenger, if he or she decides to, to choose the importance of different criteria used for seating by providing a ranking. Accordingly, when proposing a seat to a passenger during the seating allocation process, the system may balance both the passenger ranking and the airline ranking of seating criteria.

The passenger oriented seating system may also allocate a seat to a passenger at any point during the duration of the flight date booking life, which may include, but is not limited to, at the very beginning of the booking life period, at check-in and at boarding. Additionally, the passenger oriented seating system may allocate a seat to a passenger to pre-seat a passenger, based on the passenger preferences, and the weight given to each criteria, even if the passenger did not request any seat. The system may take into account a passenger's affinity preferences at the beginning of the booking life as other passengers may have already booked.

Specifically, the passenger seating criteria may include multi-leg availability, customer preference, adjacency, group linking, courtesy seating and/or seating by affinity. If the seating by affinity criteria is selected, the system may generate affinity links between passengers based on personal passenger-oriented and professional information and expectations provided by the passengers. Accordingly, the system may then propose seats to the passengers based on these affinity links. The airline seating criteria may include, but is not limited to, multi-leg availability, customer preference, adjacency group linking, courtesy seating, seating by affinity, target rule, suitability rule and/or passenger distribution.

In one aspect, the computer-implemented passenger oriented seating system may propose a real-time simulation of the seating allocation based on different ways of ranking the seating criteria and also by changing the criteria ranking. In yet another aspect, the computer-implemented passenger oriented seating system may display a warning when a seat fulfilling a passenger's seating criteria is not available. The system may also propose alternative seating options to the passenger when a seat fulfilling a passenger's seating criteria is not available.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The details of one or more embodiments are set forth in the following detailed description of the invention and the accompanying drawings. Other objectives, features, and advantages of the invention will be more readily understood upon consideration of the following Detailed Description of the invention, taken in conjunction with the accompanying drawings, and with the claims.

## DESCRIPTION OF THE DRAWINGS

The present invention is further described in the detailed description which follows, in reference to the noted plurality of drawings by way of non-limiting examples of certain embodiments of the present invention, in which like numerals represent like elements throughout the several views of the drawings, and wherein:

Figure 1 illustrates an exemplary computer-implemented passenger oriented seating system and its components consisting therein.
Figure 2 depicts the visual representation of passenger and airline ranking of seating criteria and the generated numerical weight associated with each criteria.
Figure 3 provides a flow chart depicting passenger oriented seating processing.
Figure 4 depicts a model of the seating by affinity criteria for passengers.

## DETAILED DESCRIPTION OF EXEMPLARY EMBODIMENTS

A detailed explanation of the system and method according to the preferred embodiments of the present invention are described below.

The embodiments may take the form of a hardware embodiment, a software embodiment, or an embodiment combining software and hardware. In one embodiment, the present invention takes the form of a computer-program product that includes computer-useable instructions embodied on one or more computer-readable media.

The various passenger oriented seating techniques, methods, and systems described herein can be implemented in part or in whole using computer-based systems and methods. Additionally, computer-based systems and methods can be used to augment or enhance the functionality described herein, increase the speed at which the functions can be performed, and provide additional features and aspects as a part of or in addition to those described elsewhere in this document. Various computer-based systems, methods and implementations in accordance with the described technology are presented below.

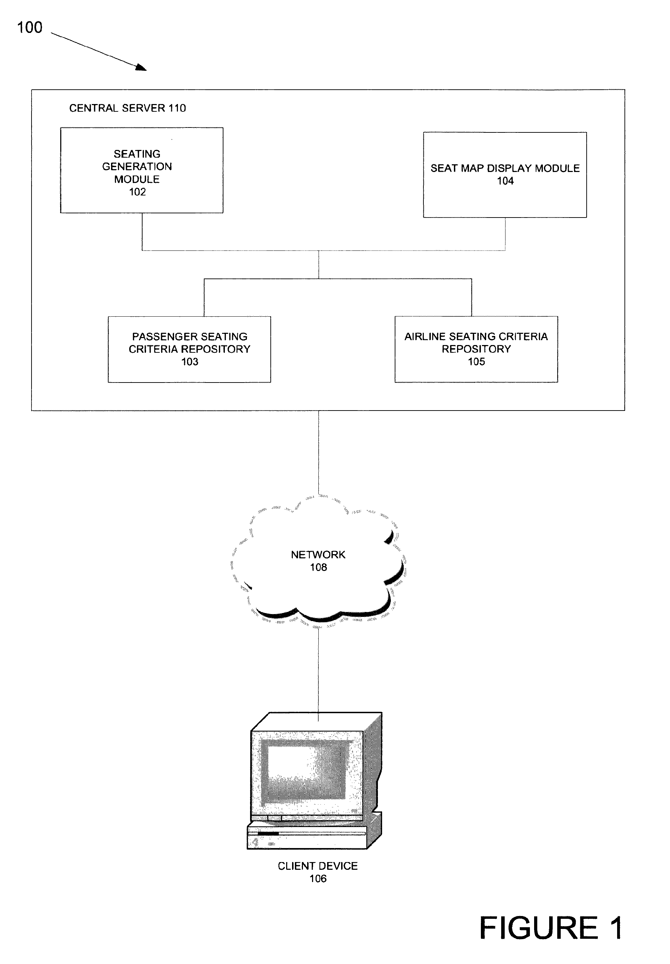

Referring to the passenger oriented seating system 100 shown in Figure 1, in an embodiment, the centralized server 110, the client device 106, computer-implemented seating generation module 102, computer-implemented seat map display module 104, passenger seating criteria repository 103, and/or airline seating criteria repository 105 may comprise a general-purpose computer and can have an internal or external memory for storing data and programs such as an operating system (e.g., DOS, Windows 2000™, Windows XP™, Windows NT™, OS/2, UNIX or Linux) and one or more application programs. Examples of application programs include computer programs implementing the techniques described herein for lyric and multimedia customization, authoring applications (e.g., word processing programs, database programs, spreadsheet programs, or graphics programs) capable of generating documents or other electronic content; client applications (e.g., an Internet Service Provider (ISP) client, an e-mail client, or an instant messaging (IM) client) capable of communicating with other computer users, accessing various computer resources, and viewing, creating, or otherwise manipulating electronic content; and browser applications (e.g., Microsoft's Internet Explorer) capable of rendering standard Internet content and other content formatted according to standard protocols such as the Hypertext Transfer Protocol (HTTP). One or more of the application programs can be installed on the internal or external storage of the general-purpose computer. Alternatively, in another embodiment, application programs can be externally stored in or performed by one or more device(s) external to the general-purpose computer. In an embodiment, the seating generation module 102 and seat map display module 104 may be an application program.

In addition, client device 106 may be or can include a desktop computer, a server, a laptop computer or other mobile computing device, a network-enabled cellular telephone (with or without media capturing/playback capabilities), wireless email client, or other client, machine or device to perform various tasks including Web browsing, search, electronic mail (email) and other tasks, applications and functions.

The general-purpose computer may include a central processing unit (CPU) for executing instructions in response to commands, and a communication device for sending and receiving data. One example of the communication device is a modem. Other examples include a transceiver, a communication card, a satellite dish, an antenna, a network adapter, or some other mechanism capable of transmitting and receiving data over a communications link through a wired or wireless data pathway.

The general-purpose computer may also include an input/output interface that enables wired or wireless connection to various peripheral devices. Examples of peripheral devices include, but are not limited to, a mouse, a mobile phone, a personal digital assistant (PDA), a keyboard, a display monitor with or without a touch screen input, and an audiovisual input device. In another implementation, the peripheral devices may themselves include the functionality of the general-purpose computer. For example, the mobile phone or the PDA may include computing and networking capabilities and function as a general purpose computer by accessing a network and communicating with other computer systems. Examples of a network, such as network 108, include the Internet, the World Wide Web, WANs, LANs, analog or digital wired and wireless telephone networks (e.g., Public Switched Telephone Network (PSTN), Integrated Services Digital Network (ISDN), and Digital Subscriber Line (xDSL)), radio, television, cable, or satellite systems, and other delivery mechanisms for carrying data. A communications link can include communication pathways that enable communications through one or more networks.

In one implementation, a processor-based system of the general-purpose computer can include a main memory, preferably random access memory (RAM), and can also include a secondary memory. The secondary memory can include, for example, a hard disk drive or a removable storage drive, representing a floppy disk drive, a magnetic tape drive, an optical disk drive (Blu-Ray, DVD, CD drive), magnetic tape, paper tape, punched cards, standalone RAM disks, Iomega Zip drive, etc. The removable storage drive can read from or write to a removable storage medium. A removable storage medium can include a floppy disk, magnetic tape, optical disk (Blu-Ray disc, DVD, CD) a memory card (CompactFlash card, Secure Digital card, Memory Stick), paper data storage (punched card, punched tape), etc., which can be removed from the storage drive used to perform read and write operations. As will be appreciated, the removable storage medium can include computer software or data.

In alternative embodiments, the secondary memory can include other similar means for allowing computer programs or other instructions to be loaded into a computer system. Such means can include, for example, a removable storage unit and an interface. Examples of such can include a program cartridge and cartridge interface (such as the found in video game devices), a removable memory chip (such as an EPROM or PROM) and associated socket, and other removable storage units and interfaces, which allow software and data to be transferred from the removable storage unit to the computer system.

In one embodiment, network 108 can also include a communications interface that allows software and data to be transferred between client device 106, central server 110, and the other components shown in system 100. The seating generation module 102, seat map display module 104, passenger seating criteria repository 103, and airline seating criteria repository 105 may also be stand-alone components that can communicate with each other, the centralized server 110, and/or the client device over network 108. Examples of communications interfaces can include a modem, a network interface (such as, for example, an Ethernet card), a communications port, and a PCMCIA slot and card. Software and data transferred via a communications interface may be in the form of signals, which can be electronic, electromagnetic, optical or other signals capable of being received by a communications interface. These signals may be provided to a communications interface via a channel capable of carrying signals and can be implemented using a wireless medium, wire or cable, fiber optics or other communications medium. Some examples of a channel can include a phone line, a cellular phone link, an RF link, a network interface, and other suitable communications channels.

In this document, the terms "computer program medium" and "computer readable medium" are generally used to refer to media such as a removable storage device, a disk capable of installation in a disk drive, and signals on a channel. These computer program products may provide software or program instructions to a computer system.

Computer-readable media include both volatile and nonvolatile media, removable and non-removable media, and contemplate media readable by a database, a switch, and various other network devices. Network switches, routers, and related components are conventional in nature, as are means of communicating with the same. By way of example, and not limitation, computer-readable media comprise computer-storage media and communications media.

Computer-storage media, or machine-readable media, include media implemented in any method or technology for storing information. Examples of stored information include computer-useable instructions, data structures, program modules, and other data representations. Computer-storage media include, but are not limited to RAM, ROM, EEPROM, flash memory or other memory technology, CD-ROM, DVD, holographic media or other optical disc storage, magnetic cassettes, magnetic tape, magnetic disk storage, and other magnetic storage devices. These memory components can store data momentarily, temporarily, or permanently.

Communications media typically store computer-useable instructions - including data structures and program modules - in a modulated data signal. The term "modulated data signal" refers to a propagated signal that has one or more of its characteristics set or changed to encode information in the signal. An exemplary modulated data signal includes a carrier wave or other transport mechanism. Communications media include any information-delivery media. By way of example but not limitation, communications media include wired media, such as a wired network or direct-wired connection, and wireless media such as acoustic, infrared, radio, microwave, spread-spectrum, and other wireless media technologies. Combinations of the above are included within the scope of computer-readable media.

Computer programs which may be associated with applications of the seating generation module 102 and seat map display module 104 (also called computer control logic) may be stored in the main memory or secondary memory. Such computer programs can also be received via a communications interface. Such computer programs, when executed, may enable the computer system to perform the features as discussed herein. In particular, the computer programs, when executed, may enable the processor to perform the described techniques. Accordingly, such computer programs may represent controllers of the computer system.

In an embodiment where the elements are implemented using software, the software can be stored in, or transmitted via, a computer program product and loaded into a computer system using, for example, a removable storage drive, hard drive or communications interface. The control logic (software), when executed by the processor, may cause the processor to perform the functions of the techniques described herein.

In another embodiment, the elements may be implemented primarily in hardware using, for example, hardware components such as PAL (Programmable Array Logic) devices, application specific integrated circuits (ASICs), or other suitable hardware components. Implementation of a hardware state machine so as to perform the functions described herein will be apparent to a person skilled in the relevant art(s). In yet another embodiment, elements may be implanted using a combination of both hardware and software.

In another embodiment, the computer-based methods can be accessed or implemented over the World Wide Web by providing access via a Web Page to the methods described herein. Accordingly, the Web Page may be identified by a Universal Resource Locator (URL). The URL may denote both a server and a particular file or page on the server. In this embodiment, it is envisioned that a client computer system, which may be the client device 106, may interact with a browser to select a particular URL, which in turn may cause the browser to send a request for that URL or page to the server identified in the URL. Typically, the server may respond to the request by retrieving the requested page and transmitting the data for that page back to the requesting client computer system, which may be the client device 106 (the client/server interaction may be typically performed in accordance with the hypertext transport protocol or_HTTP). The selected page may then be displayed to the user on the client's display screen. The client can then cause the server containing a computer program to launch an application, for example, to perform an analysis according to the described techniques. In another implementation, the server can download an application to be run on the client to perform an analysis according to the described techniques.

Referring to Figure 1, the computer-implemented passenger oriented seating system 100 may comprise a centralized server 110, a computer-implemented seating generation module 102, a computer-implemented seat map display module 104, a passenger seating criteria repository 103, an airline seating criteria repository 105, a client device 106, and network 108. In an embodiment, one or more of the seating generation module 102, seat map display module 104, passenger seating criteria repository 103, and airline seating criteria repository 105 may be integrated within each other, the centralized server 110, or the client device 106. For example, the seating generation module 102 and seat map display module 104 may be the same module. In another example, passenger seating criteria repository 103 and the airline seating criteria repository 105 may be the same repository or located within the same database. In yet another example, the seating generation module 102 and seat map display module 104 may be application programs downloaded as part of a mobile application to client device 106. In such example, the seating generation module 102 and seat map display module 104 may communicate to the other components in the system 100 over network 108. In another embodiment, one or more of the seating generation module 102, seat map display module 104, passenger seating criteria repository 103, and airline seating criteria repository 105 may be stand-alone components that can communicate with each other, the centralized server 110, and/or the client device 106 over network 108.

The computer-implemented passenger oriented seating system 100 may retrieve a passenger's ranking of passenger seating criteria, and may retrieve an airline's ranking of airline seating criteria. The system may retrieve the passenger ranking of seating criteria from an airline website, check-in kiosk, check-in agent, email message, mobile message and/or social network application. The passenger seating criteria may include, but is not limited to multi-leg availability, customer preference, adjacency group linking, courtesy seating, and/or seating by affinity. The multi-leg availability criteria relates to providing the same seat to a passenger for each leg of a multi-leg flight. The customer preference criteria relates to providing a seat to a passenger based on a specific passenger preference, which may include, but is not limited to a request for a window seat, an aisle seat, a center seat, a seat in first class, a seat in coach, a seat at the front of the plane and/or a seat at the back of the plane. The courtesy seat criteria relates to providing a seat to a passenger with an adjacent seat empty, if such a combination of seats is available. The adjacency group linking criteria relates to providing passengers who are traveling together with other passengers with seats adjacent to each other. The seating by affinity criteria relates to providing seats to passengers adjacent to passengers with whom they share common personal and/or professional interests. The airline seating criteria may include, but is not limited to, multi-leg availability, customer preference, adjacency group linking, courtesy seating, and/or seating by affinity. Certain seating criteria are reserved for the airline and may include, but is not limited to, target rule, suitability rule, and/or passenger distribution criteria. The target rules criteria may enable the airline to favor seating of particular customers in specific zones. The suitability rules criteria may enable the airline to favor seating of particular customers in specific seats. The passenger distribution criteria may enable the airline to favor seating in specific rows for all passengers.

The passenger oriented seating system 100 may store the passenger ranking of passenger seating criteria and the airline ranking of airline seating criteria so that the information may be automatically retrieved and used for future seating allocation processing by the system. The passenger seating criteria repository 103 may be a repository, such as a database, which serves as a storage location for a passenger's ranking of passenger seating criteria. The airline seating criteria repository 105 may be a repository, such as a database, which serves as a storage location for an airline's ranking of airline seating criteria.

In an embodiment, the passenger oriented seating system may assign a numerical weight to each seating criteria based on the passenger and the airline's ranking of the seating criteria. The numerical weight may be calculated by a seating algorithm, such as the following:

$$(ARi + n\ PRi)/(n+1)$$

where:
ARi = Airline Ranking value for each criterion;
PRi = Passenger Ranking value for each criterion; and
n = multiplier of passenger ranking (chosen by the airline), depending on passenger type

The seating generation module 102 may generate a seat based on the numerical weights associated with the passenger and airline's rankings of the seating criteria. The seating generation module 102 may utilize an algorithm, such as the following, to balance both the passenger and airline ranking of the seating criteria when allocating a seat:

$$Final\ Seat\ Mark = \frac{\sum_{i=1}^{4} M_i(AR_i + nPR_i)}{n+1} + \sum_{i=5}^{7} M_i \times AR_i$$

where:
ARi = Airline Ranking value for each criterion;
PRi = Passenger Ranking value for each criterion;
n = multiplier of passenger ranking (chosen by the airline), depending on passenger type; and
Mi = Temporary mark of the seat for each criterion

To balance the passenger and airline ranking of seating criteria when allocating a seat, a value may be determined as a function of the correspondence to the placement criteria for a given passenger in each seat. Each seat may then have a passenger satisfaction value for each criteria. These values may be added together for each seat and a temporary mark representing available seats with all rules taken into account may be provided. Accordingly, each seat available for the given passenger may be marked. The mark may depend on several criteria, which may include the passenger and airline seating criteria. The highest value is translated to the best seat to assign to that given passenger.

The passenger oriented seating system may also allocate a seat to a passenger at any point during the duration of the flight date booking life, which may include, but is not limited to, at the very beginning of the booking life period, at check-in and at boarding. Additionally, the passenger oriented seating system may allocate a seat to a passenger to

6

pre-seat a passenger, based on the passenger preferences, and the weight given to each criteria, even if the passenger did not request any seat. The system may take into account a passenger's affinity preferences at the beginning of the booking life as other passengers may have already booked.

In another embodiment, the seat map display module 104 displays proposed seats to passengers based on passenger and airline rankings of seating criteria. Accordingly, the seat map display module 104 enables the simulation of which seats may be generated based on the different priorities a passenger can give in his or her seating selection, and balancing the passenger and airline rankings of the seating criteria. The seat map display module 104 may also provide a real-time simulation of seating allocation by changing the criteria rankings provided by the passenger and airline. Specifically, when requesting a seat, a passenger may request a simulation of the potential seats he or she may be allocated depending on his or her respective ranking of passenger seating criteria, as well as the airline's ranking of the seating criteria. Several seats may be proposed to the passenger based on the resulting calculation of the seating algorithm depending on what rankings the passenger and/or airline has provided.

In yet another embodiment the passenger oriented seating system 100 may display a warning when a seat fulfilling a passenger's seating criteria is not available. For example, this may occur when a passenger ranks the multi-leg availability criteria as very important and he or she cannot get a through seat. The system may notify the passenger that this criteria is not met. This notification may be in the form of a message interactively sent to the passenger. Additionally, the system may propose alternative seating options to the passenger when a seat fulfilling a passenger's seating criteria is not available; these alternative seating options may correspond to other passenger seating ranking possibilities given by the passenger that can be proposed.

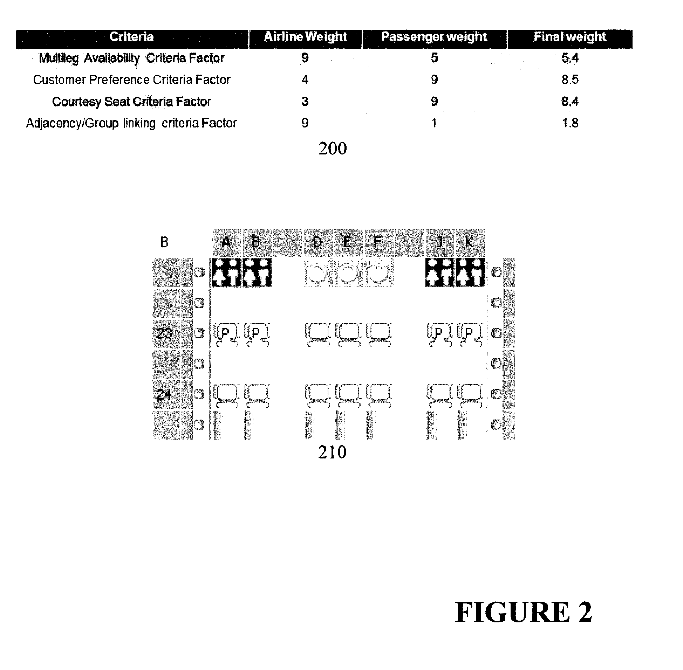

Referring to Figure 2, the passenger oriented seating system facilitates seating allocation processing based on the integration of passengers' preferences and seating criteria with an airline's preferences and seating criteria. Accordingly, the system proposes seats to passengers based on both a passenger and an airline's ranking of seating criteria 200; both the passenger and the airline may choose the importance of possible seating criteria. The passenger seating criteria may include, but is not limited to, multi-leg availability, customer preference, adjacency group linking, courtesy seating and/or seating by affinity. The airline seating criteria may include, but is not limited to, multi-leg availability, customer preference, adjacency group linking, courtesy seating, and/or seating by affinity. Certain seating criteria are reserved for the airline and may include target rule, suitability rule, and/or passenger distribution criteria. The passenger oriented seating system may assign a numerical weight to each seating criteria based on the passenger and the airline's ranking of the seating criteria.

A seat map display module 104 may display proposed seats to passengers in the form of a seat map 210, based on passenger and airline ranking of seating criteria. The seat map display module 104 may simulate the seats which may be proposed to passengers based on the differing priorities a passenger can give in his or her seating selection, and balancing the passenger and the airline ranking of the seating criteria.

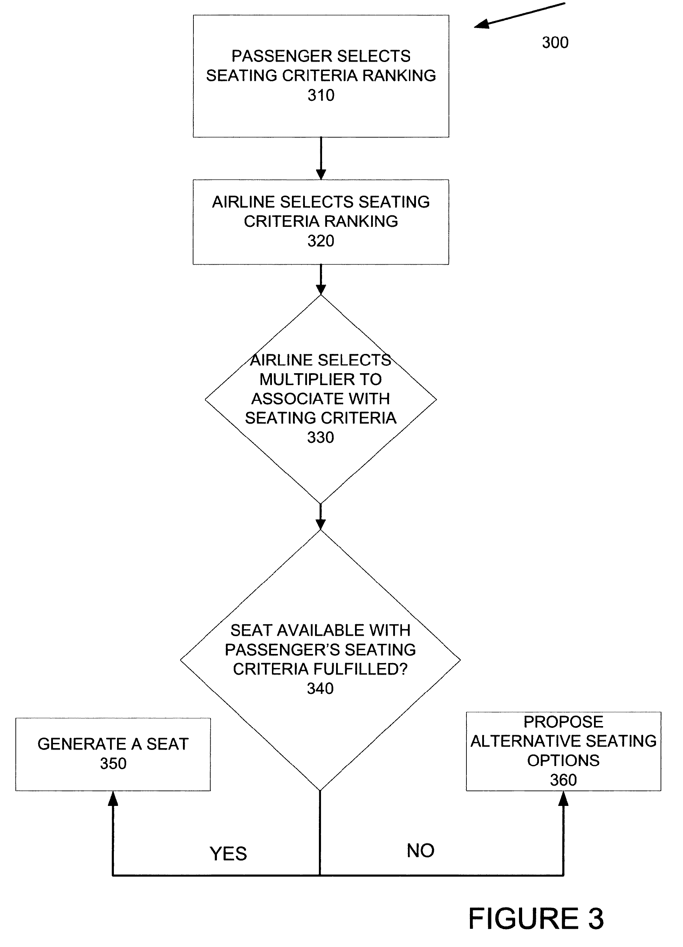

Referring to Figure 3, the seating allocation processing of the passenger oriented seating system may be initiated by a passenger selecting passenger seating criteria rankings 310. Passengers may rank the criteria by order of importance, and the system may automatically associate weights with each criteria based on its ranking. Passengers may also specify whether a particular criteria is important to them; for example a passenger may designate a specific criteria as very important, important or not important. In this case, the system may automatically associate weights with each criteria based on the level of importance designated by the passenger. Additionally, the passenger may be asked for a specific number of criteria, which criteria he or she wants his or her seating to be based. In this case, the system will automatically associate a greater weight with those criteria designated by the passenger. Similarly, the airline may also select airline seating criteria rankings 320. The airline ranking of seating criteria may be different depending on several parameters, which may include the market in which the flight is operating, the amount of time prior to the flight departure, and/or the time of year of the flight.

The airline may select a multiplier to associate with a ranking of a particular seating criteria 330. By utilizing a multiplier, the airline may favor particular customer seating expectations or its own airline priorities, depending on the customer type for which the seat is being allocated. The airline may assign a multiplier with a weight value of n, where n is between 0 and N, n may be an integer or decimal number, and 0 only gives importance to the airline priorities and N gives more importance to passenger expectations. For example, a passenger with a higher frequent flyer status may be associated with a higher multiplier value of n than that of a passenger with the lower frequent flyer status. Accordingly, the system calculation and generation of a proposed seat for a passenger will take into account this multiplier. For example, the numerical weight associated to a seating criteria may be calculated by a seating algorithm, such as the following, which may take into account multiplier n:

$$(ARi + n \, PRi)/(n+1)$$

where:

ARi = Airline Ranking value for each criterion;

PRi = Passenger Ranking value for each criterion; and

n = multiplier of passenger ranking (chosen by the airline), depending on passenger type

Additionally, the passenger oriented seating system may utilize an algorithm, such as the following, to balance both the passenger and airline ranking of the seating criteria when allocating a seat, which may take into account multiplier n :

$$Final\ Seat\ Mark = \frac{\sum_{i=1}^{4} M_i(AR_i + nPR_i)}{n+1} + \sum_{i=5}^{7} M_i \times AR_i$$

where:

ARi = Airline Ranking value for each criterion;

PRi = Passenger Ranking value for each criterion;

n = multiplier of passenger ranking (chosen by the airline), depending on passenger type; and

Mi = Temporary mark of the seat for each criterion

If a seat is available which fulfills a passenger's seating criteria 340, the passenger oriented seating system may generate a seat 350 based on the numerical weights associated with the passenger and the airline's rankings of the seating criteria. If a seat is not available which fulfills a passenger's seating criteria 340, the passenger oriented seating system may propose alternative seating options 360 to the passenger; these alternative seating options may correspond to other passenger seating ranking possibilities given by the passenger that can be proposed.

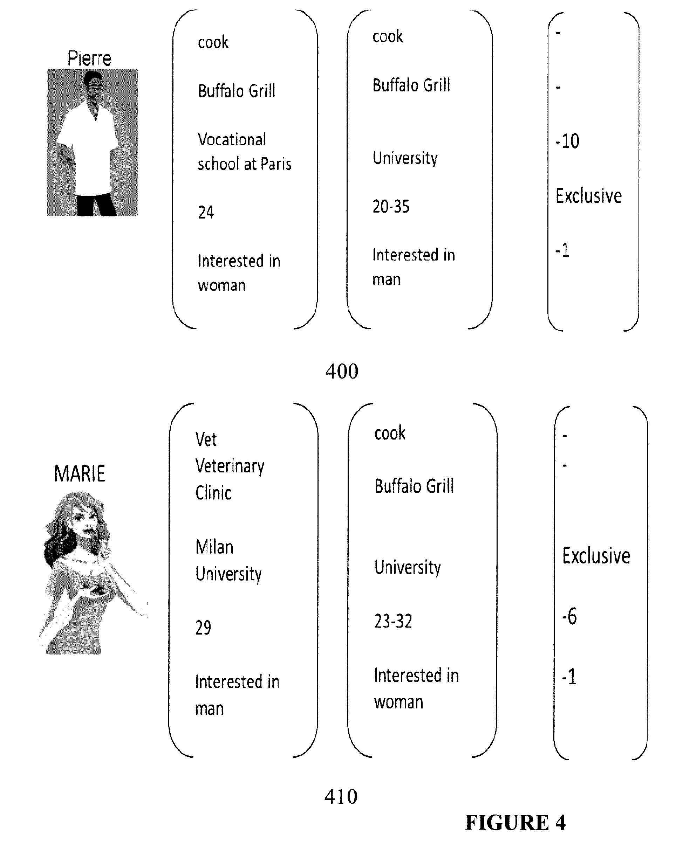

Referring to Figure 4, when the passenger oriented seating system retrieves a passenger's ranking of the seating by affinity criteria, the system may generate an affinity link between passengers based or particular descriptions, requirements and criterion weight specified by the passenger 400, 410. Accordingly, the system may propose seats to the passengers based on affinity links, and additionally, the seat map display module may display these proposed seats to the passengers.

The seating by affinity criteria may take into account and integrate personal and professional information of a passenger to be utilized during the seating allocation process; accordingly, the process may take into account passengers' preferences in being seated next to people with whom they may be interested. The personal passenger-oriented information may include, but is not limited to, age, gender, physical appearance, hobbies, relationship status, known languages, nationality, and/or likes and dislikes. The professional information may include, but is not limited to, educational background/experience, profession, and/or skills/qualifications. The system may create passenger profiles based on the personal passenger-oriented and professional information. The sources from which the system may retrieve information may include, but are not limited to an online interface, a travel agent, an email message, a mobile message and/or a social network application. Additionally the system may store these passenger profiles in a repository; the repository may be a database. A seating by affinity criteria may be designated as an exclusive criteria, and ifthis criteria is not met the affinity link between the passengers defaults to zero.

The system may generate affinity links between passengers based on professional and/or personal affinities between passengers and the weight designated by the passenger for each specific criteria. An algorithm such as the following may be used to generate affinity links between passengers:

| Passsengers' Requirements | | Criterion Weight | Passengers' Descriptions | | | Passengers' Affinity Matrix | |
|---|---|---|---|---|---|---|---|
| $R_{11}$ | $R_{1n}$ | $W_1$ | $D_{11}$ | $D_{1n}$ | | $A_{11}$ | $A_{1n}$ |
| $R_{21}$ | $R_{2n}$ | $W_2$ | $D_{21}$ | $D_{2n}$ | | $A_{21}$ | $A_{2n}$ |
| | $R_{ij}$ | $W_i$ | | $D_{ij}$ | = | | $A_{ij}$ |
| $R_{n1}$ | $R_{nn}$ | $W_n$ | $D_{n1}$ | $D_{nn}$ | | $A_{n1}$ | $A_{nn}$ |

where:

Matrix D describes the passenger description;

Matrix W represents the weights that passengers may attribute to each criteria;

Matrix R describes the passengers' requirements regarding their seating neighbor; and

Matrix A describes the affinity links between passengers

The Passengers' Affinity Matrix, Matrix A, may describe the affinity between each passengers, as the resulting elements of Matrix A may define the affinity for one passenger to be sat next to another passenger. Affinity links may be created from this matrix using any optimization algorithm

While particular embodiments of the invention have been illustrated and described in detail herein, it should be understood that various changes and modifications might be made to the invention without departing from the scope and intent of the invention. The embodiments described herein are intended in all respects to be illustrative rather than restrictive. Alternate embodiments will become apparent to those skilled in the art to which the present invention pertains without departing from its scope.

From the foregoing it will be seen that this invention is one well adapted to attain all the ends and objects set forth above, together with other advantages, which are obvious and inherent to the system and method. It will be understood that certain features and sub-combinations are of utility and may be employed without reference to other features and sub-combinations. This is contemplated and within the scope of the appended claims.

**Claims**

1. A computer-implemented passenger oriented seating system comprising:

    a passenger seating criteria repository;
    an airline seating criteria repository;
    a computer-implemented seating generation module;
    wherein the computer-implemented passenger oriented seating system:

        retrieves a passenger's ranking of passenger seating criteria;
        stores said passenger's ranking of said passenger seating criteria in the passenger seating criteria repository;
        retrieves an airline's ranking of airline seating criteria;
        stores said airline's ranking of said airline seating criteria in the airline seating criteria repository;
        assigns a numerical weight to each seating criteria based on the passenger and the airline's ranking of said seating criteria; and

        wherein the computer-implemented seating generation module generates a seat based on the numerical weights associated with said passenger and said airline's rankings of said seating criteria at any time throughout a booking life of said passenger ; and
        wherein the passenger seating criteria repository, the airline seating criteria repository and the seating generation module are integrated with each other.

2. The computer-implemented passenger oriented seating system of claim 1 wherein a multiplier may be associated with a ranking of a particular seating criteria.

3. The computer-implemented passenger oriented seating system of claim 1 wherein the system retrieves the passenger ranking of seating criteria from an airline website, check-in kiosk, check-in agent, email message, mobile message and/or social network application.

4. The computer-implemented passenger oriented seating system of claim 1 wherein the passenger seating criteria comprises multi-leg availability, customer preference, adjacency group linking, courtesy seating and/or seating by affinity.

5. The computer-implemented passenger oriented seating system of claim 4 wherein the system:

    retrieves at least a passenger's ranking of said seating by affinity criteria;
    generates an affinity link between passengers; and
    proposes seats based on said affinity link; and
    wherein a seat map display module displays said proposed seats to passengers.

6. The computer-implemented passenger oriented seating system of claim 1 wherein the airline seating criteria comprises multi-leg availability, customer preference, adjacency group linking, courtesy seating, seating by affinity, target rule, suitability rule and/or passenger distribution.

7. The computer-implemented passenger oriented seating system of claim 1 wherein a computer-implemented seat map display module displays proposed seats to passengers based on passenger and airline ranking of seating criteria, and/or displays a warning when a seat fulfilling a passenger's seating criteria is not available.

8. The computer-implemented passenger oriented seating system of claim 7 wherein the system proposes alternative seating options to said passenger when a seat fulfilling a passenger's seating criteria is not available.

9. A passenger oriented seating method comprising:

retrieving a passenger's ranking of passenger seating criteria;
storing said passenger's ranking of said passenger seating criteria in a passenger seating criteria repository;
retrieving an airline's ranking of airline seating criteria;
storing said airline's ranking of said airline seating criteria in an airline seating criteria repository;
assigning a numerical weight to each seating criteria based on the passenger and the airline's ranking of said seating criteria at any time throughout a booking life of said passenger; and
generating a seat based on the numerical weights associated with said passenger and said airline's rankings of said seating criteria.

10. The passenger oriented seating method of claim 9 further comprising associating a multiplier with a ranking of a particular seating criteria.

11. The passenger oriented seating method of claim 9 wherein the passenger seating criteria comprises multi-leg availability, customer preference, adjacency group linking, courtesy seating and/or seating by affinity.

12. The passenger oriented seating method of claim 11 further comprising:

retrieving at least a passenger's ranking of said seating by affinity criteria;
generating an affinity link between passengers;
proposing seats based on said affinity link; and
displaying said proposed seats to passengers.

13. The passenger oriented seating method of claim 9 wherein the airline seating criteria comprises multi-leg availability, customer preference, adjacency group linking, courtesy seating, seating by affinity, target rule, suitability rule and/or passenger distribution.

14. The passenger oriented seating method of claim 9 further comprising displaying proposed seats to passengers based on passenger and airline ranking of seating criteria and/or displaying a warning when a seat fulfilling a passenger's seating criteria is not available.

15. The passenger oriented seating method of claim 14 further comprising proposing alternative seating options to said passenger when a seat fulfilling a passenger's seating criteria is not available.

100

CENTRAL SERVER 110

SEATING
GENERATION
MODULE
102

SEAT MAP DISPLAY MODULE
104

PASSENGER SEATING
CRITERIA REPOSITORY
103

AIRLINE SEATING CRITERIA
REPOSITORY
105

NETWORK
108

CLIENT DEVICE
106

FIGURE 1

| Criteria | Airline Weight | Passenger weight | Final weight |
|---|---|---|---|
| Multileg Availability Criteria Factor | 9 | 5 | 5.4 |
| Customer Preference Criteria Factor | 4 | 9 | 8.5 |
| Courtesy Seat Criteria Factor | 3 | 9 | 8.4 |
| Adjacency/Group linking criteria Factor | 9 | 1 | 1.8 |

200

210

# FIGURE 2

300

PASSENGER SELECTS
SEATING CRITERIA RANKING
310

AIRLINE SELECTS SEATING
CRITERIA RANKING
320

AIRLINE SELECTS
MULTIPLIER TO
ASSOCIATE WITH
SEATING CRITERIA
330

SEAT AVAILABLE WITH
PASSENGER'S SEATING
CRITERIA FULFILLED?
340

GENERATE A SEAT
350

PROPOSE
ALTERNATIVE SEATING
OPTIONS
360

YES

NO

FIGURE 3

Pierre

| cook | cook | - |
| Buffalo Grill | Buffalo Grill | - |
| Vocational school at Paris | University | -10 |
| 24 | 20-35 | Exclusive |
| Interested in woman | Interested in man | -1 |

400

MARIE

| Vet Veterinary Clinic | cook | - |
| | Buffalo Grill | - |
| Milan University | University | Exclusive |
| 29 | 23-32 | -6 |
| Interested in man | Interested in woman | -1 |

410

**FIGURE 4**

Europäisches
Patentamt

European
Patent Office

Office européen
des brevets

# EUROPEAN SEARCH REPORT

Application Number

EP 12 36 8021

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * Statement in accordance with the Notice from the European Patent Office dated 1 October 2007 concerning business methods (OJ 11/2007; p592f) The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present | 1-15 | INV. G06Q10/02 |
|  |  |  | TECHNICAL FIELDS SEARCHED (IPC) |
|  |  |  | G06Q |

The present search report has been drawn up for all claims

| Place of search | Date of completion of the search | Examiner |
|---|---|---|
| The Hague | 11 December 2012 | Tiago Pinheiro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 12 36 8021

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | application. The notoriety of such prior art cannot reasonably be contested. No documentary evidence was therefore considered required. *<br>----- | | |

TECHNICAL FIELDS
SEARCHED (IPC)

The present search report has been drawn up for all claims

| Place of search | Date of completion of the search | Examiner |
|---|---|---|
| The Hague | 11 December 2012 | Tiago Pinheiro |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 2 698 749 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 52011505 A
- US 66152710 A